# EUROPEAN PATENT SPECIFICATION

(11) **EP 3 285 493 B1**
(45) Date of publication and mention of the grant of the patent: **18.11.2020**
(21) Application number: 17195512.3
(22) Date of filing: 25.10.2012
(51) Int. Cl.: H04N 21/258, H04N 21/472, H04N 21/845, H04L 29/06, H04N 21/414, H04N 21/433, H04N 21/436, H04L 29/08

(54) **CLIENT DEVICE, METHOD AND COMPUTER PROGRAM FOR PLAYING MEDIA CONTENT**
CLIENTVORRICHTUNG, VERFAHREN UND COMPUTERPROGRAMM ZUR WIEDERGABE VON MEDIENINHALT
DISPOSITIF CLIENT, PROCÉDÉ ET PROGRAMME INFORMATIQUE POUR LIRE UN CONTENU MULTIMÉDIA

(30) Priority: 28.10.2011 US 201161552949 P
(43) Date of publication of application: 21.02.2018
(62) Divisional of application: 12190037.7
(73) Proprietor: Cinemo GmbH, 76133 Karlsruhe (DE)
(72) Inventor: Lesser, Richard, 76227 Karlsruhe (DE)
(74) Representative: Zinkler, Franz

(56) References cited:
- EP-A1- 2 040 436
- EP-A2- 1 796 389
- WO-A1-03/107597
- US-A1- 2007 204 057
- US-A1- 2011 196 973

## Description

The present invention relates to a playback of media content such as audio, video or other multimedia content and, particularly, to the playback of media content in the context of a distributed playback scenario.

Distributed playback enables the synchronized presentation and interactive control of ultimedia content by multiple devices over a relatively low-band width network. The bandwidth of the network is considered to be relatively low if it is insufficient for transmitting the entire amount of uncompressed data that shall ultimately be presented at various terminals. While the network bandwidth may well be sufficient for transmitting the multimedia content in a compressed format, it may not be sufficient for transmitting the multimedia content in an uncompressed format such as data in a video interface standard as DVI.

An example use case may be found in automotive industry front and rear-seat entertainment units, where each independently functioning unit is required to simultaneously present the same media content, such as a DVD video disk inserted into a single device. For economical reasons, it is desirable to make use of an existing network infrastructure, rather than dedicated high band width equipment, cables, etc., required for the transmission of audio and video signals to and from each unit, especially when the audio and video signals are provided in a "raw" format.

In the field of infotainment and/or entertainment units, especially for the automotive industry, the distribution of video stream to the various video consumers within the vehicle has seen an increased interest from entertainment unit manufacturers and car manufacturers. Original equipment manufacturers (OEMs) started to ask for separation between the video source and the video consumer(s) due to requirements for flexibility, network transparency and standardization, while avoiding extensive and proprietary wirings.

The research and development challenges imposed on the suppliers are considerable, as the questions to be solved include those regarding a guaranteed bandwidth, low latencies, distributed A/V synchronization, block synchronization and compensation of differing travelling times, as well as a frame-synchronous presentation on several displays.

A system for implementing such a distributed playback architecture is described in PCT/EP 2011/064218.

The distributed playback, however, is not only limited to rear- or front-seat entertainment systems rigidly integrated within car seats or aircraft seats, but a distributed playback is additionally useful in a scenario, in which the rear-seat entertainment devices are mobile devices such as tablet computers which are able to connect to a distributed playback server within, for example, a car or an aircraft. Then, the distribution channel between the distributed playback server and the individual distributed playback clients will not be a local area network cable, but will be a local area network wireless channel.

Additionally, it is to be outlined that the distributed playback architecture does not necessarily have to be implemented in a car, but also can be implemented in any kind of environment (e.g. in a house or room or in-flight, i.e., in a plane or aircraft such as a passenger aircraft), where there is a distributed playback server and where there are one or several distributed playback client devices e.g. located in seats or the car, bus or aircraft, which can communicate with the distributed playback server in order to replay content and/or to exchange commands or user input information etc. A distributed playback architecture has been realized by the company Cinemo, and a Cinemo-enabled client can connect to a Cinemo-enabled server as soon as the communication channel between the client and the server is so that a useful connection between both devices is possible with respect to a certain selected or pre-negotiated communication format.

The disadvantage of this concept is that the connection between the client and the server will always depend on, for example, a wireless communication channel or a wired communication channel. In the case of a wired communication channel, a communication cable between the client device and the server device has to be plugged in, i.e., correctly installed. Irrespective of whether there is a wireless channel or a wired channel, the region of movement away from the server is limited and, on the other hand, there are typical media pieces which need a considerable time to be replayed such as movies or extended playlists. The user may wish to move away from the distributed playback server providing the media content such as the movie, and the user may additionally wish to watch, for example, the end of the movie in a different place where, for example, a connection to the distributed playback server is not possible anymore for certain reasons.

EP 1 796 389 A2 discloses a method and a device for switching a media renderer to another media renderer while a client performs streaming playback of content of a server.

Accordingly, a first client that performs streaming playback of the content transmits playback environment information and a URL of the content to the second client, and the second client transmits the received information and information about features of the second client to the server and requests the corresponding content which has the optimized format for the second client from the server. Therefore, a user can continue to watch the media content through a new media renderer in existing playback environment setting without additional manipulation.

US 2011/196973 discloses a method and apparatus for Inter-Device Session Continuity (IDSC). IDSC may include session transfer, session duplication, peer discovery, media transport control, session retrieval, and peer device detection of media streams between wireless transmit receive units (WTRUs) in real-time via Inter-User Equipment Transfer (IUT) across any internet protocol (IP) based network. This framework allows for both collaborative and non-collaborative media sessions, media session transport and shared media session control under the same subscription or multiple subscriptions

WO 03/107597 A1 discloses a synchronization method of an UPnP (Universal Plug and Play)-based home network to automatically transfer information of a CP (Control Point) to a different CP. By switching a role of the CP or generating a virtual UPnP device through the CP, information among plural CPs according to user's roaming can be automatically transferred or exchanged, guaranteeing a continuity of an operation. Thus, time for constructing a system can be reduced and user's convenience is maximized.

US 2007/0204057 A1 discloses a development platform and client-side technology for intelligent and cost-effective delivery of video, audio and broadband content over a network, such as the internet, to desktop, mobile computing and network connected devices. A report identifies information to be sent to or received by the client, such as client bandwidth usage, user interactions, download speeds, or error rates, related to performance or any other characteristics of downloading. A phase may change from one delivery behavior to another based on download performance so far or based on an impending due date to complete the download.

EP1796389 A2 discloses a device and method for playback of streaming content. A switch is performed from a media renderer to another media renderer, while the client performs streaming playback of content of a server. A first client transmits playback environment information in the URL of the content to the second client, and the second client transmits the received information and information about features of the second client to the server and requests the corresponding content which has the optimized format for the second client from the server.

US 2011/0196973 A1 discloses a method and apparatus for inter-device session continuity including session transfer, session duplication, peer discover, media transport control, session retrieval, and peer device detection of media streams between wireless transmit receive units in real-time via inter-user equipment transfer across any internet protocol (IP) based network.

WO 03/107597 A1 discloses a synchronization method of a universal plug and play based home network to automatically transfer information of a control point to a different control point.

EP 2 040 436 A1 discloses a method and apparatus for performing a handover in a content delivery system, including performing the handover from a first network to a second network at a protocol layer determined based on whether a content stream identification file used by said first network is paired with a content stream identification file used by said second network. Also described are a method and apparatus for performing a handover in a content delivery system, including performing the handover from a first network to a second network at a protocol layer determined based on whether a same content stream identification file used by the first network is used by the second network. Further described are a method and apparatus for performing a handover in a content delivery system, including performing the handover from a first network to a second network at one of an application layer, a network layer and a media access control layer.

It is, therefore, an object to allow an extended media replay possibility for the user.

This object is achieved by a client device for playing media content in accordance with claim 1, a method of operating a client device in accordance with claim 11, or a computer program in accordance with claim 12.

The present invention is based on the finding that the user comfort, the user acceptance and, particularly, the replay time can be extended even beyond the time, where the initial connection between the server and the client exists, when the client device additionally comprises a processor for receiving an indication that the user has actuated a continue playing facility on a client device user interface. Additionally, the processor then takes an action to continue the media content beyond a termination of the connection with the server.

Such action can comprise several different actions depending on the specific use case. One action is, for example, that the client downloads the content from the server and more particularly, from the time of a continue playing indication or from a time instant which is close to the time of a continue playing indication and the content is downloaded from the server until the end of the content. When, for example, a user presses a continue playing button on a user interface of the client device at a certain time, then the media content from this certain time to the end of the media content such as a movie is downloaded to the client device for later use by the user of the client device.

For reasons like DRM (Digital Rights Management), or for other reasons, the server can also submit additional rules to the client, e.g. that the client can only playback the downloaded media content once or within a certain time limitation.

Alternatively or additionally, the remaining content and a variable number of additional items such as one or more items of a predefined sequence of items such as a playlist can be downloaded in response to a continue playing indication.

Additionally, when the media content is structured as a playlist, then the remaining items of the playlist can be downloaded from the server in response to a continue playing indication.

Additionally, when the media content is an Internet stream such as YouTube, then the client device receives, from the server device, an indication of the specifically replayed Internet stream and then the client device starts a connection to this Internet stream by itself. Preferably, the client device jumps into the Internet stream at the position, where the continue playing indication was received. To this end, the client device additionally receives from the server device, on request or automatically an indication, where in the replayed stream the client device or server device was, when the continue playing indication was received by the client device or when an information on the continue playing indication sent out from the client device to the server device was received by the server device.

A further action taken by the client device in response to the continue playing indication may comprise the search for the content in the client's own database for playback and resuming playback at the position, when the continue playing indication was received by the client device. A further action may comprise the setting of a bookmark in a stream and the usage of the bookmark for replaying the stream from a different source. Further actions may be taken in order to make sure that the media content is continued by the client device beyond a termination of the connection with the server.

Preferred embodiments of the present invention are subsequently described with respect to the accompanying drawings, in which:
- Fig. 1: is a block diagram illustrating a distributed playback scenario;
- Fig. 2: is a flow chart for illustrating a sequence of steps taken by the distributed playback client before a termination of the connection with the distributed playback server;
- Fig. 3: illustrates a selection of action to continue the content in reply to a continue playing indication;
- Fig. 4: is a flow chart of steps taken by the client device after the connection between the client and the server has been terminated;
- Fig. 5: illustrates an embodiment of the client device in accordance with the present invention;
- Fig. 6: illustrates a flow chart for explaining a functionality of the detector of Fig. 5 in accordance with the present invention;
- Fig. 7: illustrates a functionality of the detector of Fig. 5 in accordance with an example;
- Fig. 8a: illustrates a functionality of the client device in which a remote or internal database is used;
- Fig. 8b: illustrates a schematic diagram of such a remote/internal database; and
- Fig. 9: illustrates a further functionality of the client device in accordance with a further embodiment of the present invention.

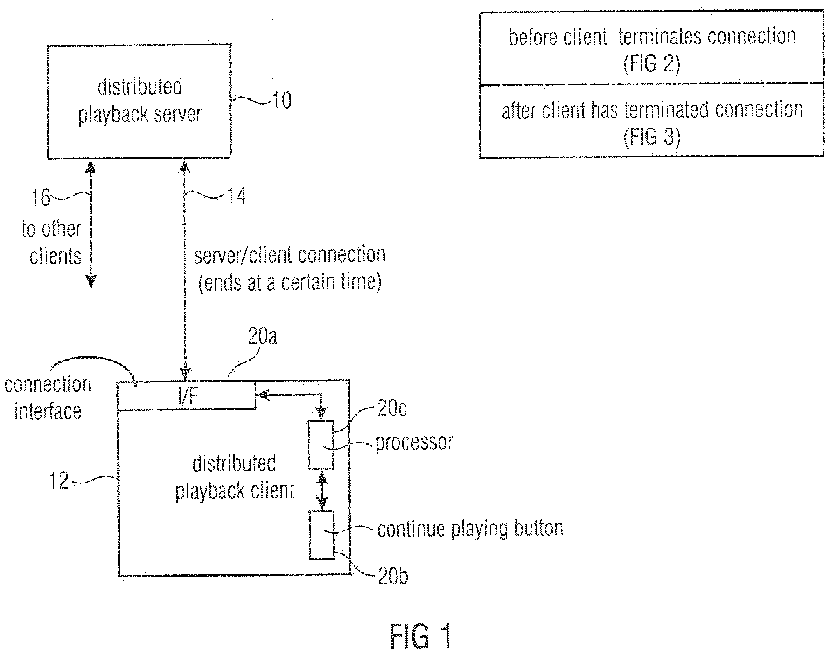

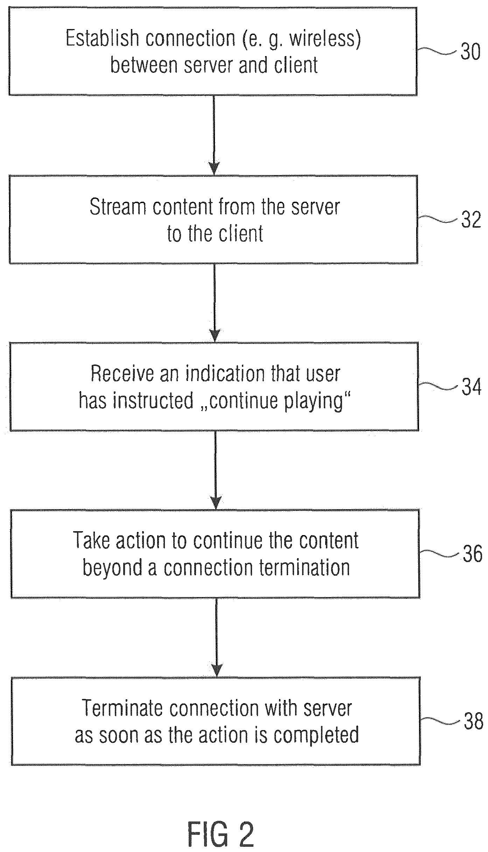

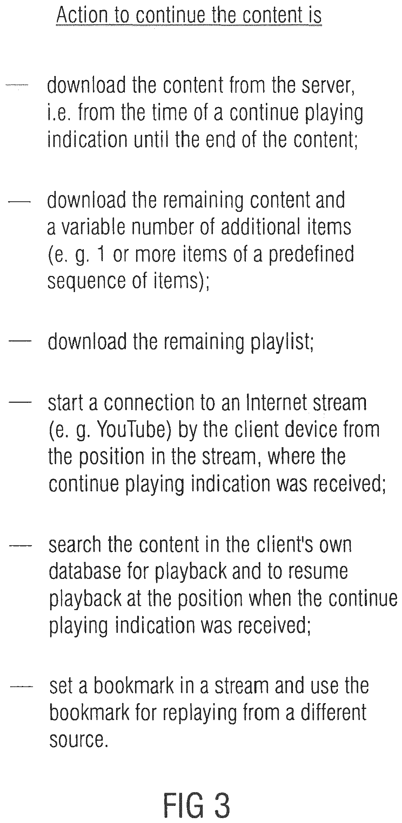

Fig. 1 illustrates a distributed playback scenario. There exist a distributed playback server 10 and several distributed playback clients, where a specific distributed playback client is indicated at 12. The distributed playback server 10 is connected to the distributed playback client via a connection 14. Other connections to other distributed playback clients which are not shown in Fig. 1 are indicated by reference numeral 16. The distributed playback client comprises a connection interface 20a for establishing a connection with the distributed playback server 10 and for receiving a media content from the server 10. Additionally, the client device comprises a user input interface having a continue playing input facility such as a continue playing button 20b. The button 20b or, alternatively, the user input interface having this continue playing facility is operatively connected to a processor 20c. The processor 20c is configured for receiving an indication that the user has actuated the continue playing functionality such as the continue playing button 20b, and for taking an action to continue the media content beyond a termination of the connection 14 with the server 10. Specifically, as indicated in the box at the upper right of Fig. 1, Fig. 2 illustrates a sequence of steps, before the connection between the client and the server is terminated and Fig. 3 illustrates a sequence of steps, after the connection between the client and the server has been terminated.

In a step 30 in Fig. 2, a connection such as a wireless connection between the server and the client of Fig. 1 is established. Then, the server streams 32 content from the server to the client. Then, the client device receives an indication that the user of the client device has instructed continue playing as illustrated at 34 in Fig. 2. In response to the reception of the indication, the client device takes action to continue the content beyond the connection termination as indicated at 36. Then, the connection with the server is terminated as soon as the action is completed as indicated at 38. This termination of the connection can be done "automatically" as it occurs, when the user moves away to far from a server in the presence of a wireless channel. Alternatively, the client can actively terminate the connection with the server which is the preferred procedure, since the client then has full control over the connection and the client knows best, whether the action taken in step 36 is completed or not yet completed.

Fig. 3 illustrates several actions to continue the content such as downloading the content from the server, i.e., from the time of a continue playing indication until the end of the content such as the end of a movie.

Alternatively, the remaining content and the variable number of additional items such as one or more items of a predefined sequence of items are downloaded to the client's storage.

Again, alternatively or additionally, a remaining playlist can be downloaded and, particularly, the items indicated by the remaining playlist.

An alternative procedure is that a connection to an Internet stream such as YouTube is started by the client device from the position in the stream, where the continue playing indication was received. In this context, the action additionally comprises that the client device requests from the server device an identification of the Internet stream such as the URL and, additionally, an identification of the point in time, at which the playback should be resumed subsequent to a termination of the connection between the client and the server.

An alternative action may comprise the search of the content in the client's own database for playback and to resume playback at the position when the continue playing indication was received. In this context, the action additionally comprises a client's request to the server to identify the actually replayed media content so that the client knows for which media item it has to search in its own database.

A further action may be the setting of a bookmark in a media stream and the usage of the bookmark for replaying from a different source or from the same source, but with a different connection.

The client device may comprise a continue playing facility as a specific button, which can be a hard button or a soft button of a touch-sensitive display. A client downloads the remaining part of the stream from the distributed playback server. The client can then stop the connection such as by leaving, for example, a car or aircraft and the wireless connection is terminated when the client has moved far away from the car or aircraft. Then a useful wireless connection to the server in the car is not possible anymore. Due to the continue playing functionality, however, the user can continue to watch or listen to the media file.

An option is continue playing "+1", ... "+2", etc. and "finish playing playlist". This feature would then download also some or all additional files. Optionally, the user does not have different buttons, but the continue playing functionality is pre-configured to one of the above options.

Optionally, as soon as the user plays something else not from the downloaded playlist anymore, this "copied" playlist will disappear, i.e., will be deleted. This may be particularly useful due to copyright owner issues that otherwise may come up.

If the content comes from, for example, an Internet stream such as YouTube, and the client disconnects from the server, the client will itself try to open an Internet connection to the same clip. Another option would be that as soon as the client will lose the connection, there will appear a button "continue playing" and then the client will try to continue to play the Internet stream or, if it was a file playback before, tries to find the same file in its own media management database and then will continue to play.

A further option is that this button will only appear, if the same file has been found, or in case of an Internet connection, if the client is online itself.

Another option would be that the client will automatically always continue to play and optionally informs the user that is has been detached. Optionally, there is a database online, which could help the user to find the right connection. When the user is, for example, watching a DVB stream channel such as BBC, and now the user is disconnected, the database can find a web-stream also having the same channel, i.e., the BBC channel.

In implementations, continue playing can either be proactive or reactive. In the first case, the user indicates in advance that he wishes to continue playback at some future time or location. In the second case, an optional feature is that no warning is given, but that the processor was restarted after being switched off or lost connection or some other interruption. The played content can be local content or content from a locally connected device. Additionally, the content can be Internet content which is not registered with any specific media server but which is generally available such as from YouTube and which is just a plain URL. The content can additionally be remote content over HTTP from a specific distributed media server running on another machine.

The continue playing can be optionally done in several ways. A bookmark can be stored with some kind of file identifier and this requires that the content still exists somewhere, when the user wishes to continue the playback. The identifier must be valid across multiple instances of a distributed media server if that is where the content is located. The bookmark can be stored both proactively or reactively. A further option is that the entire content is downloaded in advance which can be done proactively.

For replaying local content, a bookmark can be sufficient.

For replaying Internet content, a bookmark or a download can be chosen, depending on if the location, one wishes to continue playing will have an Internet connection.

In case of remote content from a distributed media server, either a bookmark or a download can be chosen, depending on if the location one wishes to continue playing will have a dedicated distributed playback server running with the same content.

In certain situations, the user will know if the location he wishes to continue playing will have physical access to the same content. In this case the user should probably choose himself an option with local content or an option with Internet content. In this case, the continue playing feature requires two button functionalities such as one button for "bookmark" and a further button for "download". Depending on a playback configuration, additional features related to this functionality can be greyed out, i.e., when a download of a local content, for example, is not possible.

A further option is that, if the distributed playback functionality is shutdown or a connection is lost, then a bookmark is saved when possible. This will enable the continue playing feature to work reactively, when the distributed playback functionality is re-started and the content is still available.

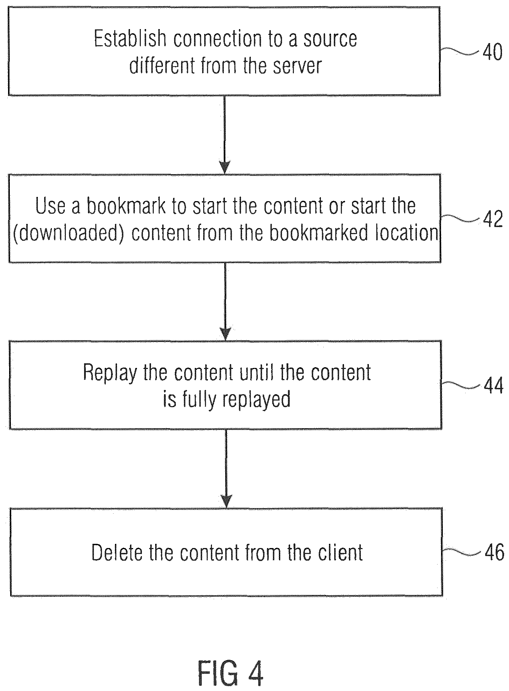

Fig. 4 illustrates a sequence of steps of a preferred embodiment, which occurs, after the client has terminated the connection.

In a step 40, the client device establishes a connection to a source different from the distributed playback server 10. This source can be the Internet or can be a storage device in the distributed playback client such as a hard disk drive or a semiconductor storage. Alternatively, the source different from the original server can be a further distributed playback server available in the location where the user has moved subsequent to terminating the connection in step 38.

In step 42, the user uses a bookmark to start the content or start the "downloaded" content from the bookmark location in the media file. Then, in step 44, the content is replayed until the content is fully replayed or, for example, the movie is finished or the playlist is fully played. Then, in step 46, the content can be deleted from the client, when content has been downloaded to the client. When data associated to contents are just playlists, the playlists are deleted in order to address some kind of copyright or other issues related to actually downloading content contrary to only streaming but not locally saving content.

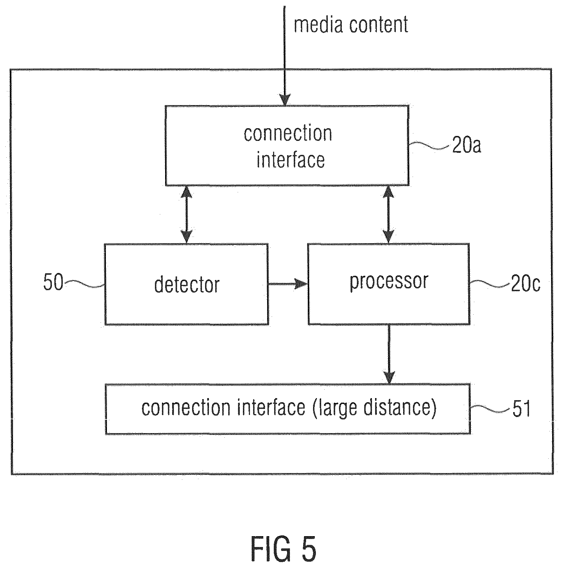

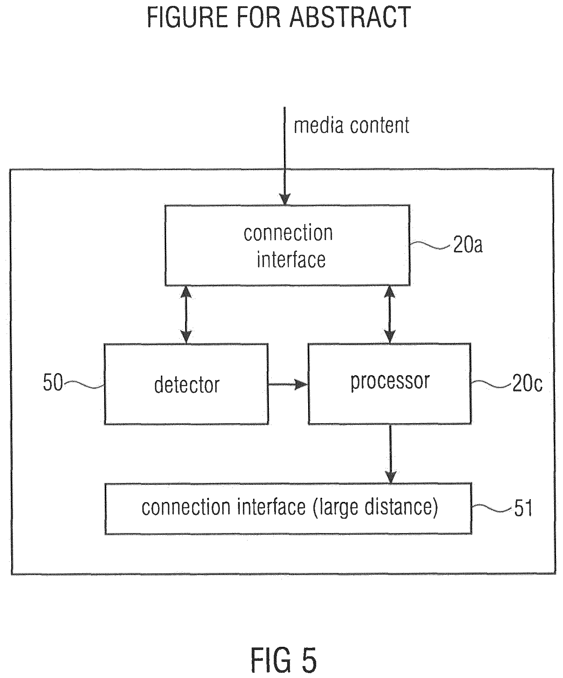

Fig. 5 illustrates a further embodiment of the client device comprising the connection interface 20a for establishing a connection with a server (not shown) and for receiving a media content from the server via the connection. Furthermore, Fig. 5 illustrates a processor for taking an action to continue the media content beyond a termination of the connection with the server indicated with 20c similar to Fig. 1.

Additionally, the client device in Fig. 5 comprises a detector 50 for detecting, whether the media content is to be continued beyond a termination of the connection with the server, where the detector is furthermore configured to provide a detection result to the processor 20c, when it is detected by the detector that the media content is to be continued beyond the termination of the connection with the server.

As illustrated in Fig. 1, the detector 50 may comprise a user interface schematically illustrated in Fig. 1 as the continue playing button 20b. Therefore, in other words, the detector 50 may comprise a user input interface having a continue playing input facility such as the continue playing button.

Furthermore, the detector 50 is configured to provide the detection result, when the user has activated the continuing playing input facility.

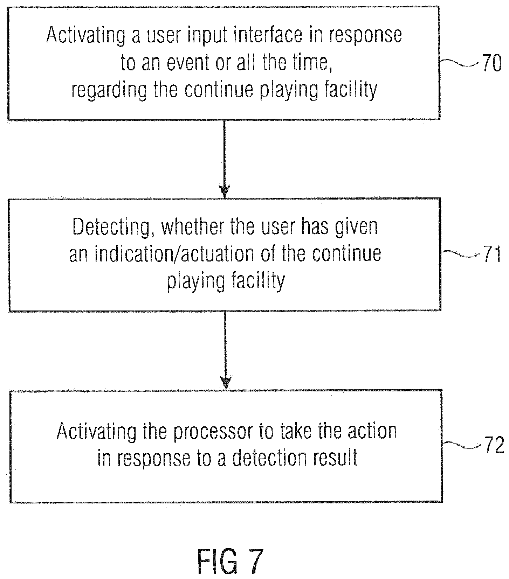

As illustrated in Fig. 7, this functionality is so that the detector 50 activates a user input interface in response to a certain event or all the time, where this user input interface is related to a continue playing facility or, in other words, comprises a display or any other input facility for receiving a continue playing input from the user.

Then, in step 71, it is detected by the detector 50, whether the user has actuated the continue playing facility. In other words, the detector detects, whether there is an indication that the user has actually actuated the continue playing input facility.

Then, in step 72, the detector activates the processor 20c to take the action in response to a detection result. In other words, the detector outputs the detection result and the processor 20c receives the detection result and starts the action to continue the media content beyond a termination of the connection with the server in response to a reception of the detection result.

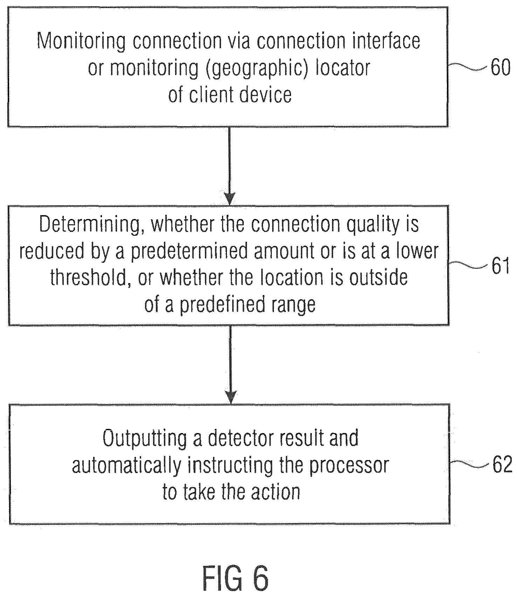

In accordance with the present invention, the detector provides the detection result by detecting different events. In a step 60 illustrated in Fig. 6, the detector monitors the connection via the connection interface 20a or, alternatively or additionally monitors a location of the client device. This location of the client device can be a geographic location of the client device, but can also be any other kind of location of the client device such as a certain distance around a server e. g. in a car or aircraft.

In step 61, the detector determines, whether the connection quality via the connection interface is reduced by a predetermined amount or is at a lower threshold. Therefore, the detector determines, by monitoring the connection quality such as by monitoring RSSI values or any other, for example wireless signal connection parameters, whether it can be expected that the connection quality is soon terminated. This is a strong indication that the client device is moved farther and farther away from the server.

This monitoring can be performed either by monitoring, whether the quality becomes worse by a predetermined amount such as 3 or 6 dB or this can be alternatively determined by monitoring, whether the connection quality exemplarily represented by a certain (absolute) RSSI value approaches a lower threshold such as a lower threshold RSSI value, which is determined, for example empirically.

This connection threshold is set in such a way that it can be assumed, when normal movement speeds away from the server are considered, that the connection quality to the server will remain for some remaining time so that the client device has a good chance to successfully retrieve the rest of the media content from the server. However, when the threshold is more close to the absolute connection threshold quality, then the client device does not have the chance anymore to download the rest of the media content from the server via the connection, but the client device then has to look for other alternatives to obtain the content as, for example, exemplarily illustrated in Fig. 3.

Then, in step 62, the detector outputs its detection result and, automatically, the processor is instructed to take the action without any user activity. In this embodiment, it is additionally preferred that the processor then takes the action to obtain the rest of the media content and, as soon as the processor has received the rest of the media content or has established a different source or a connection to the same source via a different connection standard, the processor then activates a continue playing button on the display of the client device or outputs a certain acoustical signal by the client device so that the user knows that everything is ready for continue playing, although the connection to the initial server is terminated. Therefore, the user can only see and activate the continue playing facility, when the media content is available. Additionally, in a further embodiment, the processor can notify the user via a certain output interface such as a display interface that the connection to the initial server is detached. This user information can be performed either when a successful continue playing alternative has been found or irrespective of whether this alternative has been found, in any case, when the connection to the server is broken or detached.

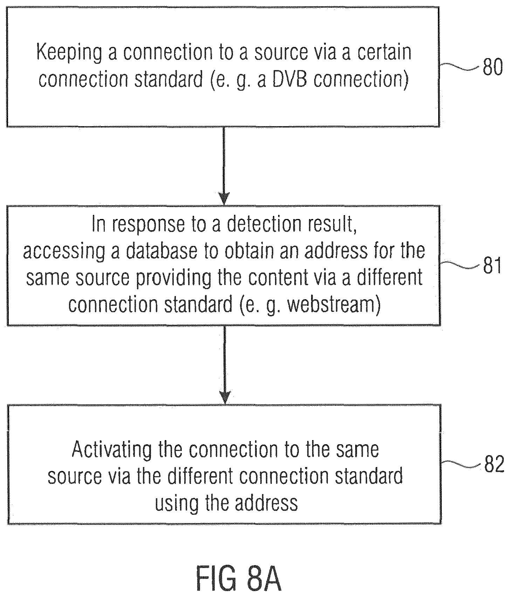

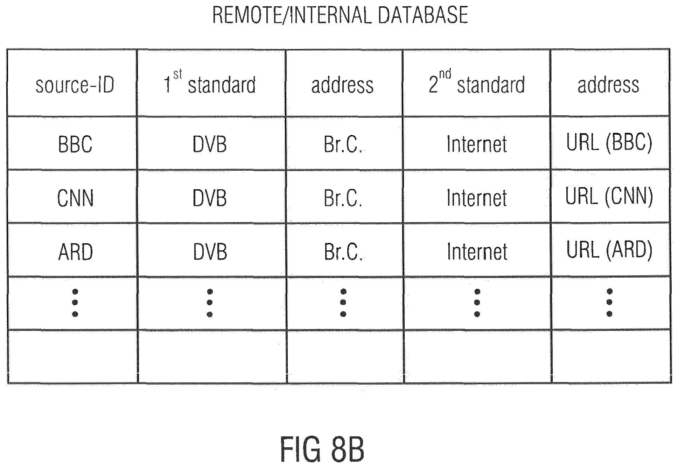

Fig. 8a illustrates a further functionality of the client device. In step 80, the connection interface 20a is configured to keeping a connection to a source via a certain connection standard which can, for example, be a DVB (Digital Video Broadcasting) connection or any other broadcast or other connection. The processor is configured, as illustrated in step 81, to access a database, in response to a detection result from the detector 50. This database can be an internal or external/remote database and this database is in a certain embodiment, illustrated in Fig. 8b. The processor 20c is configured to access this database to obtain an address for the same source providing the content via a different standard. This different connection standard can, for example, be a webstream or Internet standard such as a packet-based streaming or any other packet-based transmission standard.

In step 82, the processor is then configured to activate the connection to the same source via the different connection standard using the address retrieved from the database.

The database illustrated in Fig. 8b illustrates, in an association to each other, source IDs for media content sources such a television channels indicates as "BBC, CNN, ARD". However, any other source-IDs for any other broadcast content such as radio programs or any other sources can be provided. Since the television channels transmit via the DVB standard, the first standard indication is "DVB". For broadcast audio channels, the standard can be DAB.

Then, in the address column for the first standard, an indication that this is a broadcast channel is indicated, which means that this is a broadcast connection rather than a point-to-point connection.

Then, in the second standard column, it is outlined for the three television channels that the second standard is an Internet standard and in the address column for the second standard, the URL (Uniform Resource Locator) for the television programs are indicated. Typically, all television programs or audio programs also provide a webstream and the URL of the server providing this webstream can then be used by the processor 20c for activated a connection as illustrated in step 82.

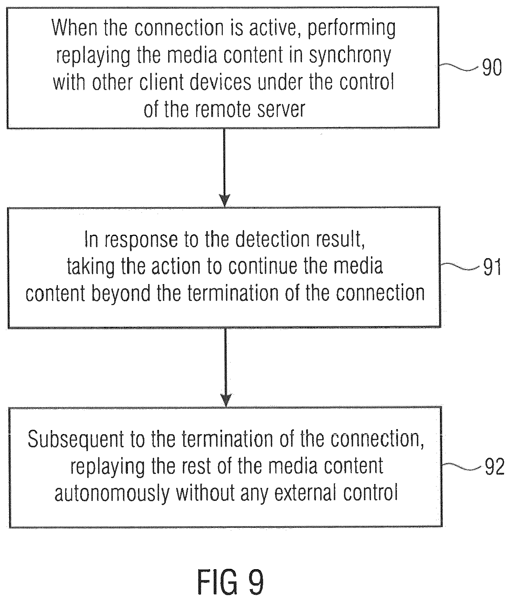

Fig. 9 illustrates a further functionality of a client device in accordance with another embodiment. As illustrated in Fig. 9, the processor 20c is configured for performing replaying a media content, when the connection to the server is still active, where this replaying is performed in synchrony with at least one other client device under the control of the remote server. Hence, the processor is configured for performing, for example, the Cinemo distributed playback architecture/functionality for replaying the media content, when the straightforward normal connection to the Cinemo server is active.

However, when the user is, for example, leaving the car or aircraft, then the processor 20c is configured to take the action to continue the media content beyond termination of the connection in response to a detection result/a user input as indicated by 91. Then, subsequent to the termination of the connection, and provided that the processor was successful in obtaining the media content rest or providing another source for the rest of the media content, step 92 is performed. In step 92, however, the client device is configured for replaying the rest of the media content autonomously without any external control and, therefore, also without any synchrony with at least one other client device. Therefore, the client device is configured for performing two different replaying facilities, wherein the first replaying facility is a synchronous replaying facility under the control of the remote server as illustrated in 90 and the second replaying facility is an autonomous straightforward replaying facility without any control of an external server with respect to a synchronization with other client devices.

The client device illustrated in Fig. 5 may further comprise a second connection interface 51 which is a large distance wireless communication interface configured for establishing connection to the Internet, for example, via a cellular telephone network. On the other hand, however, the connection interface 20a may then be implemented as a small distance wireless connection interface such as a Bluetooth or WLAN connection interface.

Furthermore, the processor 20c may be configured to activate, as the action to continue the media content, the large distance wireless connection interface 51 in response to the detection result or the indication that the user intends to have a continue playing functionality and to connect to a remote server associated with a URL and to download a remaining portion of a media content or to stream a remaining portion of the media content using a position information determined together with the URL. Particularly, the processor 20c is configured to determine, in response to the detection result, a URL, from which the media content can be received and the position information indicating a position in the media content before or at which the connection to the server was terminated.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a BD, DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The scope of protection of the present invention is limited only by the appended claims.

## Claims

1. Client device (12) for playing media content, the client device (12) comprising:
a connection interface (20a) configured for establishing (30) a connection with a server (10) and for receiving a media content from the server (10) via the connection;
a detector (50) configured for detecting (34), whether the playing of the media content is to be continued beyond a termination of the connection with the server (10), and configured for providing a detection result in case it is determined that the playing of the media content is to be continued beyond the termination of the connection with the server (10); and
a processor (20c) configured for taking (36) an action to continue playing the media content by the client device (12) beyond the termination of the connection with the server (10), in response to the detection result provided by the detector (50), wherein the processor (20c) is configured to take the action under control of the detector (50) without any user interaction,
wherein the detector (50) is configured
to determine (61) a quality of the connection to the server (10), and to provide (62) the detection result in response to a quality decrease by a predefined amount or in response to a quality decrease until a quality threshold, or
to detect a movement of the client device (12) and to provide the detection result in response to a movement of the client device (12) beyond a predefined movement area,
wherein the processor (20c) is configured
to obtain, as the action, the rest of the media content, or to establish, as the action, a different source for the media content, or to establish, as the action, a connection to the same source via a different connection standard,
to display or activate (70) a continue playing button (20b) on the client device (12), when the processor (20c) has obtained the rest of the media content, or has established the different source for the media content, or has established the connection to the same source via the different connection standard and is in the position to play the media content beyond the termination of the connection, and to not display or not activate the continue playing button (20b) on the client device (12), when the processor (20c), although having taken the action is not in the position to play the media content beyond the termination of the connection, and
to play the media content in response to an activation of the displayed or activated continue playing button (20b) by the user.

2. Client device of claim 1,
wherein the processor (20c) is configured
to notify the user by an output signal that the connection is terminated (38), and that the action has been taken, the output signal comprising an optical display signal, a vibration signal or an acoustic signal.

3. Client device of one of the preceding claims, wherein the media content is a media stream, wherein the media stream is originating from a source at the server (10) and a connection to the source is in accordance with a first connection standard (80),
wherein the processor (20c) is configured
to connect to a database comprising different source identifications and associated addresses of the same source providing the media content via the different connection standard,
to access (81) the database to retrieve the address of the same source providing the media content via the different communication standard, and to connect (82) to the source having the address using the different communication standard.

4. Client device of claim 3, wherein the first connection standard is a digital video broadcasting connection standard to obtain a certain broadcast program, and wherein the different connection standard is an Internet protocol connection standard to obtain the same broadcast program via the Internet.

5. Client device in accordance with one of the preceding claims,
wherein the connection interface (20a) is configured as a small distance wireless connection interface (20a), wherein the client device (12) furthermore comprises a large distance wireless connection interface (51) configured for establishing a connection to the Internet,
wherein the processor (20c) is configured,
to activate, as the action, the large distance wireless connection interface (51) in response to an indication that the user has actuated a continue playing facility,
to determine the uniform resource locator (URL), from which the media content can be received,
to connect to an Internet server associated with the uniform resource locator (URL) and
to determine the position information indicating a position in the media content before or at which the connection to the server (10) was terminated, and
to download a remaining portion of the media content or to stream a remaining portion of the media content using the position information.

6. Client device in accordance with one of the preceding claims, wherein the processor (20c) is configured to perform at least one action of the following set of actions to continue playing the media content, the set of actions comprising:
determining a position in the media content at or before the detection result is provided, and downloading the media content from the server (10) and storing the downloaded content on the client device (12) starting from the position in the media content indicated by position information;
determining a position in the media content at or before the detection result is provided, wherein the media content is a predefined playlist comprising a sequence of media items, downloading a remaining portion of a current media item or additionally one or more additional items in the sequence of media contents either in response to a predefined setting or in response to an user input regarding a number of additional items;
determining a position in the media content at or before the detection result is provided, starting a connection to an Internet server by the client device (12) from the position in the media content;
determining a position in the media content at or before the detection result is provided, searching a media database stored in a local storage of the client device (12), and resuming playback at the position from the media database stored in the local storage of the client device (12); and
setting a bookmark at a position in the media content at or before the detection result is provided, connecting (40) to the different source for the media content, and receiving (42, 44) from the different source for the media content using the bookmark.

7. Client device of one of the preceding claims, in which the processor (20c) is configured for replaying (44) the media content until an end of the media content and for deleting (46) the content on the client device (12), when the end of the media content is fully replayed without any user interaction.

8. Client device of one of the preceding claims, wherein the processor (20c) is configured to store a bookmark at a termination of the connection, and
wherein the processor (20c) is configured to resume (44) playing back the media content at the bookmark, when a connection to the same server (10) is established at a later time.

9. Client device in accordance with one of the preceding claims,
wherein the server (10) is a distributed playback server,
wherein the processor (20c) is configured to replay (90) the media content in synchrony with at least one other client device (12) under a control of the distributed playback server (10) during the connection with the server (10), and wherein the processor (20c) is configured to replay (92) a remaining portion of the media content subsequent to taking (91) the action in an autonomous way without being synchronized with the at least one other client device (12).

10. Client device of claim 1
wherein the detector (50) is configured to determine (61) the quality of the connection to the server (10), and to provide (62) the detection result in response to the quality decrease until the quality threshold, wherein the quality threshold is set in such a way that it can be assumed, when movements away from the server (10) are considered, that the connection quality to the server (10) will remain for some remaining time, so that the client device (12) has a good chance to successfully retrieve a rest of the media content from the server (10).

11. Method of operating a client device for playing media content, the client device comprising a connection interface (20a), a detector (50), and a processor (20c), comprising:
establishing (30), by the connection interface (20a), a connection with a server (10) and receiving a media content from the server (10) via the connection;
detecting (34), by the detector (50), whether the playing of the media content is to be continued beyond a termination of the connection with the server (10), and providing a detection result in case it is determined that the playing of the media content is to be continued beyond the termination of the connection with the server (10); and
taking (36) an action, by the processor (20c), to continue playing the media content by the client device (12) beyond the termination (38) of the connection with the server (10), in response to the detection result provided by the detecting, wherein the processor (20c) is configured to take (36) the action under control of the detector (50) without any user interaction,
wherein the detecting (34) comprises
determining (61) a quality of the connection to the server (10), and providing (62) a detection result in response to a quality decrease by a predefined amount or in response to a quality decrease until a quality threshold, or
detecting a movement of the client device (12) and providing the detection result in response to a movement of the client device (12) beyond a predefined movement area,
wherein the processor (20c) is configured to perform the following steps:
obtaining, as the action, the rest of the media content, or establishing, as the action, a different source for the media content, or establishing, as the action, a connection to the same source via a different connection standard, display or activating (70) a continue playing button (20b) on the client device (12), when the processor (20c) has obtained the rest of the media content, or has established the different source for the media content, or has established the connection to the same source via the different connection standard and is in the position to play the media content beyond the termination of the connection, and not displaying or not activating the continue playing button (20b) on the client device (12), when the processor (20c), although having taken the action is not in the position to play the media content beyond the termination of the connection, and
playing the media content in response to an activation of the displayed or activated continue playing button (20b) by the user.

12. Computer program that when executed by a computer causes the computer to perform the method of operating a client device (12) in accordance with claim 11.

## Patentansprüche

1. Client-Vorrichtung (12) zum Wiedergeben von Medieninhalt, wobei die Client-Vorrichtung (12) folgende Merkmale aufweist:
eine Verbindungsschnittstelle (20a), die zum Einrichten (30) einer Verbindung mit einem Server (10) und zum Empfangen eines Medieninhalts von dem Server (10) über die Verbindung konfiguriert ist;
einen Detektor (50), der zum Erfassen (34) konfiguriert ist, ob das Wiedergeben des Medieninhalts über ein Beenden der Verbindung mit dem Server hinaus (10) fortgesetzt werden soll, und der zum Bereitstellen eines Erfassungsergebnisses konfiguriert ist, falls bestimmt wird, dass das Wiedergeben des Medieninhalts über das Beenden der Verbindung mit dem Server hinaus (10) fortgesetzt werden soll; und
einen Prozessor (20c), der zum Durchführen (36) einer Aktion konfiguriert ist, um das Wiedergeben des Medieninhalts durch die Client-Vorrichtung (12) über das Beenden der Verbindung mit dem Server hinaus (10) fortzusetzen, ansprechend auf das Erfassungsergebnis, das durch den Detektor (50) bereitgestellt wird, wobei der Prozessor (20c) dazu konfiguriert ist, die Aktion unter Steuerung des Detektors (50) ohne jede Benutzerinteraktion durchzuführen,
wobei der Detektor (50) konfiguriert ist zum:
Bestimmen (61) einer Qualität der Verbindung mit dem Server (10) und Bereitstellen (62) des Erfassungsergebnisses ansprechend auf eine Qualitätsverringerung um einen vordefinierten Betrag oder ansprechend auf eine Qualitätsverringerung bis zu einer Qualitätsschwelle, oder
Erfassen einer Bewegung der Client-Vorrichtung (12) und Bereitstellen des Erfassungsergebnisses ansprechend auf eine Bewegung der Client-Vorrichtung (12) über einen vordefinierten Bewegungsbereich hinaus, wobei der Prozessor (20c) konfiguriert ist zum:
Erhalten, als Aktion, des Rests des Medieninhalts oder Einrichten, als Aktion, einer anderen Quelle für den Medieninhalt oder Einrichten, als Aktion, einer Verbindung mit derselben Quelle über einen anderen Verbindungsstandard,
Anzeigen oder Aktivieren (70) einer Wiedergabe-fortsetzen-Taste (20b) auf der Client-Vorrichtung (12), wenn der Prozessor (20c) den Rest des Medieninhalts erhalten hat oder die andere Quelle für den Medieninhalt eingerichtet hat oder die Verbindung mit derselben Quelle über den anderen Verbindungsstandard eingerichtet hat und in der Position ist, den Medieninhalt über das Beenden der Verbindung hinaus wiederzugeben und die Wiedergabe-fortsetzen-Taste (20b) auf der Client-Vorrichtung (12) nicht anzuzeigen oder zu aktivieren, wenn der Prozessor (20c) trotz durchgeführter Aktion nicht in der Position ist, den Medieninhalt über das Beenden der Verbindung hinaus wiederzugeben, und
Wiedergeben des Medieninhalts ansprechend auf eine Aktivierung der angezeigten oder aktivierten Wiedergabe-fortsetzen-Taste (20b) seitens des Benutzers.

2. Client-Vorrichtung gemäß Anspruch 1:
wobei der Prozessor (20c) konfiguriert ist zum:
Benachrichtigen des Benutzers durch ein Ausgabesignal, dass die Verbindung beendet (38) ist und dass die Aktion durchgeführt wurde, wobei das Ausgabesignal ein optisches Anzeigesignal, ein Vibrationssignal oder ein akustisches Signal aufweist.

3. Client-Vorrichtung gemäß einem der vorhergehenden Ansprüche, wobei der Medieninhalt ein Medienstrom ist, wobei der Medienstrom aus einer Quelle auf dem Server (10) stammt und eine Verbindung mit der Quelle gemäß einem ersten Verbindungsstandard (80) erfolgt,
wobei der Prozessor (20c) konfiguriert ist zum:
Verbinden mit einer Datenbank, die andere Quellenidentifikationen und zugeordnete Adressen derselben Quelle aufweist, die den Medieninhalt bereitstellt, über den anderen Verbindungsstandard,
Zugreifen (81) auf die Datenbank, um die Adresse derselben Quelle abzurufen, die den Medieninhalt bereitstellt, über den anderen Kommunikationsstandard, und
Verbinden (82) mit der Quelle, die die Adresse aufweist, unter Verwendung des anderen Kommunikationsstandards.

4. Client-Vorrichtung gemäß Anspruch 3, bei der der erste Verbindungsstandard ein digitaler Videobroadcast-Verbindungsstandard ist, um ein bestimmtes Broadcastprogramm zu erhalten, und wobei der andere Verbindungsstandard ein Internetprotokoll-Verbindungsstandard ist, um dasselbe Broadcastprogramm über das Internet zu erhalten.

5. Client-Vorrichtung gemäß einem der vorhergehenden Ansprüche,
wobei die Verbindungsschnittstelle (20a) als drahtlose Verbindungsschnittstelle für geringe Entfernungen (20a) konfiguriert ist, wobei die Client-Vorrichtung (12) darüber hinaus eine drahtlose Verbindungsschnittstelle für große Entfernungen (51) aufweist, die zum Einrichten einer Internetverbindung konfiguriert ist,
wobei der Prozessor (20c) konfiguriert ist zum:
Aktivieren, als Aktion, der drahtlosen Verbindungsschnittstelle für große Entfernungen (51) ansprechend auf eine Angabe, dass der Benutzer eine Wiedergabe-fortsetzen-Einrichtung betätigt hat,
Bestimmen der einheitlichen Quellenangabe (URL), von der der Medieninhalt empfangen werden kann,
Verbinden mit einem Internetserver, der der einheitlichen Quellenangabe (URL) zugeordnet ist, und
Bestimmen der Positionsinformationen, die eine Position in dem Medieninhalt angeben, vor der oder an der die Verbindung mit dem Server (10) beendet wurde, und
Herunterladen eines verbleibenden Abschnitts des Medieninhalts oder Streamen eines verbleibenden Abschnitts des Medieninhalts unter Verwendung der Positionsinformationen.

6. Client-Vorrichtung gemäß einem der vorhergehenden Ansprüche, wobei der Prozessor (20c) dazu konfiguriert ist, zumindest eine Aktion aus dem folgenden Satz von Aktionen durchzuführen, um das Wiedergeben des Medieninhalts fortzusetzen, wobei der Satz von Aktionen Folgendes aufweist:
Bestimmen einer Position in dem Medieninhalt, an der oder vor der das Erfassungsergebnis bereitgestellt wird, und Herunterladen des Medieninhalts von dem Server (10) und Speichern des heruntergeladenen Inhalts auf der Client-Vorrichtung (12), ausgehend von der Position in dem Medieninhalt, die durch die Positionsinformationen angegeben wird;
Bestimmen einer Position in dem Medieninhalt, an der oder vor der das Erfassungsergebnis bereitgestellt wird, wobei der Medieninhalt eine vordefinierte Wiedergabeliste ist, die eine Sequenz von Medienelementen aufweist, Herunterladen eines verbleibenden Abschnitts eines aktuellen Medienelements oder zusätzlich eines oder mehrerer zusätzlicher Elemente in der Sequenz des Medieninhalts, entweder ansprechend auf eine vordefinierte Einstellung oder ansprechend auf eine Benutzereingabe hinsichtlich einer Anzahl von zusätzlichen Elementen;
Bestimmen einer Position in dem Medieninhalt, an der oder vor der das Erfassungsergebnis bereitgestellt wird, Starten einer Verbindung mit einem Internetserver durch die Client-Vorrichtung (12) von der Position in dem Medieninhalt aus;
Bestimmen einer Position in dem Medieninhalt, an der oder vor der das Erfassungsergebnis bereitgestellt wird, Durchsuchen einer Mediendatenbank, die in einem lokalen Speicher der Client-Vorrichtung (12) gespeichert ist, und Wiederaufnehmen der Wiedergabe an der Position von der Mediendatenbank, die in dem lokalen Speicher der Client-Vorrichtung (12) gespeichert ist; und
Festlegen eines Lesezeichens an einer Position in dem Medieninhalt, an der oder vor der das Erfassungsergebnis bereitgestellt wird, Verbinden (40) mit der anderen Quelle für den Medieninhalt und Empfangen (42, 44) von der anderen Quelle für den Medieninhalt unter Verwendung des Lesezeichens.

7. Client-Vorrichtung gemäß einem der vorhergehenden Ansprüche, bei dem der Prozessor (20c) dazu konfiguriert ist, den Medieninhalt bis zu einem Ende des Medieninhalts wiederzugeben (44) und den Inhalt auf der Client-Vorrichtung (12) zu löschen (46), wenn das Ende des Medieninhalts ohne jede Benutzereingabe vollständig wiedergegeben wird.

8. Client-Vorrichtung gemäß einem der vorhergehenden Ansprüche, wobei der Prozessor (20c) dazu konfiguriert ist, ein Lesezeichen bei Beenden der Verbindung zu speichern, und
wobei der Prozessor (20c) dazu konfiguriert ist, die Wiedergabe des Medieninhalts an dem Lesezeichen wiederaufzunehmen (44), wenn eine Verbindung mit demselben Server (10) zu einem späteren Zeitpunkt eingerichtet wird.

9. Client-Vorrichtung gemäß einem der vorhergehenden Ansprüche,
wobei der Server (10) ein verteilter Wiedergabeserver ist,
wobei der Prozessor (20c) dazu konfiguriert ist, den Medieninhalt synchron zu zumindest einer anderen Client-Vorrichtung (12) unter Steuerung des verteilten Wiedergabeservers (10) während der Verbindung mit dem Server (10) wiederzugeben (90), und
wobei der Prozessor (20c) dazu konfiguriert ist, einen verbleibenden Abschnitt des Medieninhalts nach einem Durchführen (91) der Aktion auf autonome Art wiederzugeben (92), ohne mit der zumindest einen anderen Client-Vorrichtung (12) synchronisiert zu sein.

10. Client-Vorrichtung gemäß Anspruch 1,
wobei der Detektor (50) dazu konfiguriert ist, die Qualität der Verbindung mit dem Server (10) zu bestimmen (61) und ansprechend auf die Qualitätsverringerung bis zu der Qualitätsschwelle das Erfassungsergebnis bereitzustellen (62), wobei die Qualitätsschwelle auf eine Weise festgelegt ist, dass unter Berücksichtigung von Bewegungen weg von dem Server (10) angenommen werden kann, dass die Verbindungsqualität zu dem Server (10) für die restliche Zeit gleich bleibt, so dass die Client-Vorrichtung (12) eine gute Gelegenheit dazu hat, einen Rest des Medieninhalts erfolgreich von dem Server (10) abzurufen.

11. Verfahren zum Betreiben einer Client-Vorrichtung zum Wiedergeben von Medieninhalt, wobei die Client-Vorrichtung eine Verbindungsschnittstelle (20a), einen Detektor (50) und einen Prozessor (20c) aufweist, wobei das Verfahren folgende Schritte aufweist:
Einrichten (30), durch die Verbindungsschnittstelle (20a), einer Verbindung mit einem Server (10) und Empfangen eines Medieninhalts von dem Server (10) über die Verbindung;
Erfassen (34), durch den Detektor (50), ob das Wiedergeben des Medieninhalts über ein Beenden der Verbindung mit dem Server hinaus (10) fortgesetzt werden soll, und Bereitstellen eines Erfassungsergebnisses, falls bestimmt wird, dass das Wiedergeben des Medieninhalts über das Beenden der Verbindung mit dem Server hinaus (10) fortgesetzt werden soll; und
Durchführen (36) einer Aktion, durch den Prozessor (20c), um das Wiedergeben des Medieninhalts durch die Client-Vorrichtung (12) über das Beenden (38) der Verbindung mit dem Server hinaus (10) fortzusetzen, ansprechend auf das Erfassungsergebnis, das durch das Erfassen bereitgestellt wird, wobei der Prozessor (20c) dazu konfiguriert ist, die Aktion (36) unter Steuerung des Detektors (50) ohne jede Benutzerinteraktion durchzuführen,
wobei das Erfassen (34) folgende Schritte aufweist:
Bestimmen (61) einer Qualität der Verbindung mit dem Server (10) und Bereitstellen (62) eines Erfassungsergebnisses ansprechend auf eine Qualitätsverringerung um einen vordefinierten Betrag oder ansprechend auf eine Qualitätsverringerung bis zu einer Qualitätsschwelle, oder
Erfassen einer Bewegung der Client-Vorrichtung (12) und Bereitstellen des Erfassungsergebnisses ansprechend auf eine Bewegung der Client-Vorrichtung (12) über einen vordefinierten Bewegungsbereich hinaus,
wobei der Prozessor (20c) dazu konfiguriert ist, die folgenden Schritte durchzuführen:
Erhalten, als Aktion, des Rests des Medieninhalts oder Einrichten, als Aktion, einer anderen Quelle für den Medieninhalt oder Einrichten, als Aktion, einer Verbindung mit derselben Quelle über einen anderen Verbindungsstandard,
Anzeigen oder Aktivieren (70) einer Wiedergabe-fortsetzen-Taste (20b) auf der Client-Vorrichtung (12), wenn der Prozessor (20c) den Rest des Medieninhalts erhalten hat oder die andere Quelle für den Medieninhalt eingerichtet hat oder die Verbindung mit derselben Quelle über den anderen Verbindungsstandard eingerichtet hat und in der Position ist, den Medieninhalt über das Beenden der Verbindung hinaus wiederzugeben und die Wiedergabe-fortsetzen-Taste (20b) auf der Client-Vorrichtung (12) nicht anzuzeigen oder zu aktivieren, wenn der Prozessor (20c) trotz durchgeführter Aktion nicht in der Position ist, den Medieninhalt über das Beenden der Verbindung hinaus wiederzugeben, und
Wiedergeben des Medieninhalts ansprechend auf eine Aktivierung der angezeigten oder aktivierten Wiedergabe-fortsetzen-Taste (20b) seitens des Benutzers.

12. Computerprogramm, das bei Ausführung durch einen Computer bewirkt, dass der Computer das Verfahren zum Betreiben einer Client-Vorrichtung (12) gemäß Anspruch 11 durchführt.

## Revendications

1. Dispositif client (12) pour reproduire un contenu multimédia, le dispositif client (12) comprenant:
une interface de connexion (20a) configurée pour établir (30) une connexion avec un serveur (10) et pour recevoir un contenu multimédia du serveur (10) à travers la connexion;
un détecteur (50) configuré pour détecter (34) si la reproduction du contenu multimédia doit se poursuivre au-delà de la fin de la connexion avec le serveur (10), et configuré pour fournir un résultat de détection au cas où il est déterminé que le la reproduction du contenu multimédia doit se poursuivre au-delà de la fin de la connexion avec le serveur (10); et
un processeur (20c) configuré pour prendre (36) une action pour continuer à reproduire le contenu multimédia par le dispositif client (12) au-delà de la fin de la connexion avec le serveur (10), en réponse au résultat de détection fourni par le détecteur (50), où le processeur (20c) est configuré pour prendre l'action sous la commande du détecteur (50), sans aucune interaction de l'utilisateur,
dans lequel le détecteur (50) est configuré
pour déterminer (61) une qualité de la connexion avec le serveur (10), et pour fournir (62) le résultat de détection en réponse à une diminution de qualité d'une quantité prédéfinie ou en réponse à une diminution de qualité jusqu'à un seuil de qualité, ou
pour détecter un déplacement du dispositif client (12) et pour fournir le résultat de détection en réponse à un déplacement du dispositif client (12) au-delà d'une zone de déplacement prédéfinie,
dans lequel le processeur (20c) est configuré
pour obtenir, comme action, le reste du contenu multimédia, ou pour établir, comme action, une source différente pour le contenu multimédia, ou pour établir, comme action, une connexion à la même source à l'aide d'une norme de connexion différente,
pour afficher ou activer (70) un bouton de reproduction en continu (20b) sur le dispositif client (12) lorsque le processeur (20c) a obtenu le reste du contenu multimédia, ou a établi la source différente pour le contenu multimédia, ou a établi la connexion à la même source à l'aide de la norme de connexion différente et est en mesure de reproduire le contenu multimédia au-delà de la fin de la connexion, et pour ne pas afficher ou ne pas activer le bouton de reproduction en continu (20b) sur le dispositif client (12) lorsque le processeur (20c), bien qu'il ait pris l'action, n'est pas en mesure de reproduire le contenu multimédia au-delà de la fin de la connexion, et
pour reproduire le contenu multimédia en réponse à une activation du bouton de reproduction en continu affiché ou activé (20b) par l'utilisateur.

2. Dispositif client selon la revendication 1,
dans lequel le processeur (20c) est configuré
pour notifier à l'utilisateur par un signal de sortie que la connexion est terminée (38), et que l'action a été prise, le signal de sortie comprenant un signal d'affichage optique, un signal de vibration ou un signal acoustique.

3. Dispositif client selon l'une des revendications précédentes, dans lequel le contenu multimédia est un flux multimédia, dans lequel le flux multimédia provient d'une source sur le serveur (10) et une connexion à la source est conforme à une première norme de connexion (80),
dans lequel le processeur (20c) est configuré
pour se connecter à une base de données comprenant différentes identifications de source et adresses associées de la même source fournissant le contenu multimédia à l'aide des différentes normes de connexion,
pour accéder (81) à la base de données pour récupérer l'adresse de la même source fournissant le contenu multimédia à l'aide des différentes normes de communication, et
pour se connecter (82) à la source présentant l'adresse à l'aide de la norme de communication différente.

4. Dispositif client selon la revendication 3, dans lequel la première norme de connexion est une norme de connexion de diffusion vidéo numérique pour obtenir un certain programme de diffusion, et dans lequel la norme de connexion différente est une norme de connexion de protocole Internet pour obtenir le même programme de diffusion via Internet.

5. Dispositif client selon l'une des revendications précédentes,
dans lequel l'interface de connexion (20a) est configurée comme une interface de connexion sans fil à courte distance (20a), dans lequel le dispositif client (12) comprend par ailleurs une interface de connexion sans fil à longue distance (51) configurée pour établir une connexion à Internet,
dans lequel le processeur (20c) est configuré
pour activer, comme action, l'interface de connexion sans fil à longue distance (51) en réponse à une indication que l'utilisateur a actionné une installation de reproduction en continu,
pour déterminer le localisateur de ressources uniforme (URL) duquel peut être reçu le contenu multimédia,
pour se connecter à un serveur Internet associé au localisateur de ressources uniforme (URL), et
pour déterminer les informations de position indiquant une position dans le contenu multimédia avant ou à laquelle s'est terminée la connexion avec le serveur (10), et
pour télécharger une partie restante du contenu multimédia ou pour diffuser une partie restante du contenu multimédia à l'aide des informations de position.

6. Dispositif client selon l'une des revendications précédentes, dans lequel le processeur (20c) est configuré pour effectuer au moins une action de l'ensemble d'actions suivant pour continuer à reproduire le contenu multimédia, l'ensemble d'actions comprenant le fait de:
déterminer une position dans le contenu multimédia au moment où est ou avant que soit fourni le résultat de détection, et télécharger le contenu multimédia du serveur (10) et mémoriser le contenu téléchargé sur le dispositif client (12) à partir de la position dans le contenu multimédia indiquée par les informations de position;
déterminer une position dans le contenu multimédia au moment où est ou avant que soit fourni le résultat de détection, où le contenu multimédia est une liste de reproduction prédéfinie comprenant une séquence d'éléments multimédias, télécharger une partie restante d'un élément multimédia actuel ou, en plus, un ou plusieurs éléments additionnels dans la séquence de contenus multimédia, soit en réponse à un réglage prédéfini, soit en réponse à une entrée d'utilisateur relative à un nombre d'éléments additionnels;
déterminer une position dans le contenu multimédia au moment où est ou avant que soit fourni le résultat de détection, commencer une connexion avec un serveur Internet par le dispositif client (12) à partir de la position dans le contenu multimédia;
déterminer une position dans le contenu multimédia au moment où est ou avant que soit fourni le résultat de détection, rechercher une base de données multimédia mémorisée dans un mémoire locale du dispositif client (12) et reprendre la reproduction à la position de la base de données multimédia mémorisée dans la mémoire locale du dispositif client (12); et
établir un signet à une position dans le contenu multimédia au moment où est ou avant que soit fourni le résultat de détection, se connecter (40) à la source différente pour le contenu multimédia et recevoir (42, 44) de la source différente pour le contenu multimédia à l'aide du signet.

7. Dispositif client selon l'une des revendications précédentes, dans lequel le processeur (20c) est configuré pour reproduire (44) le contenu multimédia jusqu'à la fin du contenu multimédia et pour effacer (46) le contenu sur le dispositif client (12) lorsque la fin du contenu multimédia est entièrement reproduite, sans aucune interaction de l'utilisateur.

8. Dispositif client selon l'une des revendications précédentes, dans lequel le processeur (20c) est configuré pour mémoriser un signet à la fin de la connexion, et
dans lequel le processeur (20c) est configuré pour reprendre (44) la reproduction du contenu multimédia au signet lorsqu'une connexion avec le même serveur (10) est établie ultérieurement.

9. Dispositif client selon l'une des revendications précédentes,
dans lequel le serveur (10) est un serveur de reproduction distribué,
dans lequel le processeur (20c) est configuré pour reproduire (90) le contenu multimédia en synchronisme avec au moins un autre dispositif client (12) sous la commande du serveur de reproduction distribué (10) pendant la connexion avec le serveur (10), et
dans lequel le processeur (20c) est configuré pour reproduire (92) une partie restante du contenu multimédia après avoir pris (91) l'action de manière autonome sans être synchronisé avec l'au moins un autre dispositif client (12).

10. Dispositif client selon la revendication 1,
dans lequel le détecteur (50) est configuré pour déterminer (61) la qualité de la connexion avec le serveur (10), et pour fournir (62) le résultat de détection en réponse à la diminution de qualité jusqu'au seuil de qualité, où le seuil de qualité est réglé de manière à pouvoir supposer, lorsqu'il est tenu compte des déplacements en s'éloignant du serveur (10), que la qualité de la connexion avec le serveur (10) restera pendant un certain temps restant, de sorte que le dispositif client (12) ait une bonne chance de récupérer avec succès un reste du contenu multimédia du serveur (10).

11. Procédé permettant de faire fonctionner un dispositif client pour reproduire un contenu multimédia, le dispositif client comprenant une interface de connexion (20a), un détecteur (50) et un processeur (20c), comprenant le fait de:
établir (30), par l'interface de connexion (20a), une connexion avec un serveur (10) et recevoir un contenu multimédia du serveur (10) à travers la connexion;
détecter (34), par le détecteur (50), si la reproduction du contenu multimédia doit se poursuivre au-delà de la fin de la connexion avec le serveur (10), et fournir un résultat de détection au cas où il est déterminé que la reproduction du contenu multimédia doit se poursuivre au-delà de la fin de la connexion avec le serveur (10); et
prendre (36) une action, par le processeur (20c), pour continuer à reproduire le contenu multimédia par le dispositif client (12) au-delà de la fin (38) de la connexion avec le serveur (10), en réponse au résultat de détection fourni par la détection, où le processeur (20c) est configuré pour prendre (36) l'action sous la commande du détecteur (50), sans aucune interaction de l'utilisateur,
dans lequel la détection (34) comprend le fait de
déterminer (61) une qualité de la connexion avec le serveur (10), et fournir (62) un résultat de détection en réponse à une diminution de qualité d'une quantité prédéfinie ou en réponse à une diminution de qualité jusqu'à un seuil de qualité, ou
détecter un déplacement du dispositif client (12) et fournir le résultat de détection en réponse à un déplacement du dispositif client (12) au-delà d'une zone de déplacement prédéfinie,
dans lequel le processeur (20c) est configuré pour effectuer les étapes suivantes consistant à:
obtenir, comme action, le reste du contenu multimédia, ou établir, comme action, une source différente pour le contenu multimédia, ou établir, comme action, une connexion à la même source à l'aide d'une norme de connexion différente,
afficher ou activer (70) un bouton de reproduction en continu (20b) sur le dispositif client (12) lorsque le processeur (20c) a obtenu le reste du contenu multimédia, ou a établi la source différente pour le contenu multimédia, ou a établi la connexion à la même source à l'aide de la norme de connexion différente et est en mesure de reproduire le contenu multimédia au-delà de la fin de la connexion, et ne pas afficher ou ne pas activer le bouton de reproduction en continu (20b) sur le dispositif client (12) lorsque le processeur (20c), bien qu'il ait pris l'action, n'est pas en mesure de reproduire le contenu multimédia au-delà de la fin de la connexion, et
reproduire le contenu multimédia en réponse à une activation du bouton de reproduction en continu affiché ou activé (20b) par l'utilisateur.

12. Programme d'ordinateur qui, lorsqu'il est exécuté par un ordinateur, fait que l'ordinateur réalise le procédé permettant de faire fonctionner un dispositif client (12) selon la revendication 11.
